# EUROPEAN PATENT APPLICATION

(11) **EP 2 086 283 A1**
(43) Date of publication of application: **05.08.2009**
(21) Application number: 09151564.3
(22) Date of filing: 28.01.2009
(51) Int. Cl.: H04W 88/06, H04L 29/06

(54) **Dual mode terminal and method for processing data service thereof**

(30) Priority: 29.01.2008 KR 20080009075
(71) Applicant: Samsung Electronics Co., Ltd., Suwon-si, Gyeonggi-do 442-743 (KR)
(72) Inventor: Lee, Won Ju c/o Samsung Electronics Co., Ltd, Gyeonggi-do (KR)
(74) Representative: Harrison Goddard Foote

(57) **Abstract**

A dual mode terminal for simultaneously processing data services using controllers, and a method for processing the data services in the dual mode terminal is provided. The method includes processing a 1st data service in at least one of a 1st controller including an application and a 1st data protocol stack and a 2nd controller including a 2nd data protocol stack, inputting a request for processing a 2nd data service during the processing of the 1st data service, and processing the 2nd data service in another controller comprising at least one of the 1st controller and the 2nd controller, which does not process the 1 st data service.

## Description

### BACKGROUND OF THE INVENTION

### 1. Field of the Invention:

The present invention relates to data service technologies of portable terminals. More particularly, the present invention relates to a dual mode terminal that may simultaneously process two data services using two controllers included in the dual mode terminal and to a method for processing data services in the dual mode terminal.

### 2. Description of the Related Art:

As portable terminals gain in popularity, a variety of functions are increasingly developed and installed in the portable terminals. In recent years, dual mode or dual standby mode portable terminals have been developed that can be operated in two types of wireless communication networks. The dual mode portable terminals refer to portable terminals that can be operated in a hetero-network area or when the portable terminals are roaming to other network providers.

Dedicated terminals, which are generally used to support one type of wireless communication system, can be operated only in an area serviced by a corresponding wireless communication system. On the contrary, dual mode portable terminals can support both communication systems, for example, a Code Divisional Multiple Access (CDMA) system and a Global System for Mobile communication (GSM) system, and can be operated in both the CDMA and the GSM service areas.

The dual mode portable terminals are configured in such a way that a CDMA chip and GSM chip are mounted thereon and an application is installed to one of the two chips, which is set to a master chip. Here, another chip to which the application is not installed is called a slave chip. The application is only installed on the master chip because this reduces the memory size to be used and the coding work, compared to when the application is installed on both the master chip and the slave chip.

Conventional dual mode terminals must process data services using only one activated chip of the master chip and the slave chip. In that case, the other chip that is not processing data services must be idle. Accordingly the conventional dual mode terminals are disadvantageous in that they do not make efficient use of system resources.

Therefore, a need exists for a dual mode terminal and a method for processing data services in a dual mode terminal using efficient resources.

### SUMMARY OF THE INVENTION

An aspect of the present invention is to address at least the above-mentioned problems and/or disadvantages and to provide at least the advantages described below. Accordingly, an aspect of the present invention is to provide a dual mode portable terminal whose chips may simultaneously process individual data services.

In accordance with an aspect of the present invention, a method for processing data services in a dual mode terminal including a first (1st) controller having an application and a 1st data protocol stack and a second (2nd) controller having a 2nd data protocol stack is provided. The method includes processing a 1st data service in at least one of the 1st controller and the 2nd controller; inputting a request for processing a 2nd data service during the processing of the 1st data service; and processing the 2nd data service in another controller comprising at least one of the 1 st controller and the 2nd controller, which does not process the 1 st data service.

In accordance with an aspect of the present invention, a dual mode terminal is provided. The dual mode terminal includes a 1st controller including an application and a 1st data protocol stack; and a 2nd controller including a 2nd data protocol stack. If a request for processing a 2nd data service is input while a 1 st data service is being processed in at least one of the 1 st controller and the 2nd controller, the 2nd data service is processed by another controller comprising at least one of the 1 st controller and the 2^{nd} controller, which does not process the 1 st data service.

Other aspects, advantages and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings, in which:

FIG. 1 is a schematic view illustrating a dual mode terminal according to an exemplary embodiment of the present invention;

FIG. 2 is a schematic block diagram illustrating a first (1st) controller and a second (2nd) controller according to an exemplary embodiment of the present invention;

FIG. 3 is a flowchart describing a method for processing data services according to an exemplary embodiment of the present invention;

FIG. 4 is a flowchart describing a method for processing a packet service according to an exemplary embodiment of the present invention; and

FIG. 5 is a flowchart describing a method for processing a modem service according to an exemplary embodiment of the present invention.

Throughout the drawings, it should be noted that like reference numbers are used to depict the same or similar elements, features and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component interface" includes reference to one or more of such interface.

Although the drawings represent an exemplary embodiment of the present invention, the drawings are not necessarily to scale and certain features may be exaggerated or omitted in order to better illustrate and explain the present invention.

A data service refers to all services that allow a dual mode portable terminal to access an external Internet environment, via a data protocol stack, and to perform data communication. More particularly, the data service includes a service that allows a dual mode portable terminal to perform direct data communication through an application, which is called a packet service. The data service also includes a service that allows a dual mode portable terminal to perform data communication (or a laptop call) using a wireless laptop computer, which is a modem service. In particular, the packet service may be processed through a wireless platform, such as a Binary Runtime Environment for Wireless (BREW), a General Virtual Machine (GVM), JAVA and a Wireless Internet Platform for Interoperability (WIPI).

A controller is described as an active controller or an inactive controller. That is, when a controller sets a dual mode portable terminal to operate in a corresponding mode, the controller is an active controller. In an exemplary embodiment of the present invention, it is assumed that the controller of the dual mode portable terminal includes a CDMA chip (1st controller) and a GSM chip (2nd controller). For example, if the dual mode portable terminal is set to a CDMA mode, the 1st controller performing CDMA-related operations is an active controller. Similarly, if the dual mode portable terminal is set to a GSM mode, the 2nd controller performing GSM-related operations is an active controller. On the other hand, the other controller, not set to active, is an inactive controller.

Hereinafter, exemplary embodiments of the present invention will be described in detail with reference to the accompanying drawings.

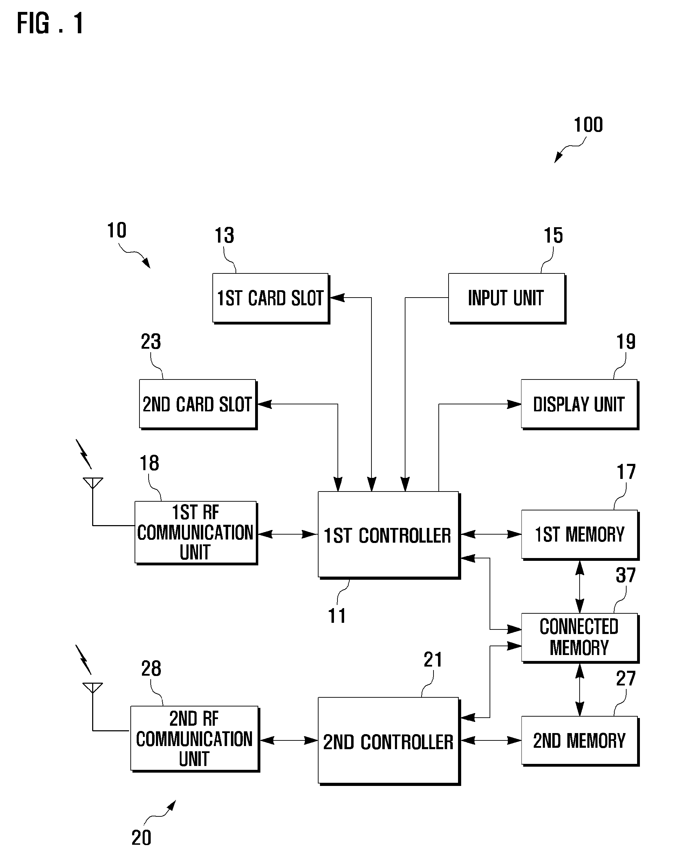

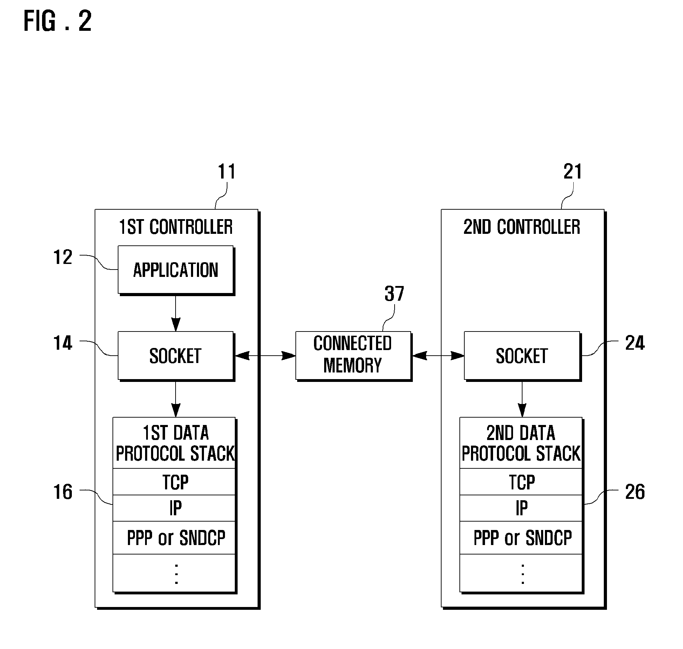

FIG. 1 is a schematic view illustrating a dual mode terminal according to an exemplary embodiment of the present invention. FIG. 2 is a schematic block diagram illustrating a 1st controller and 2nd controller according to an exemplary embodiment of the present invention.

As shown in FIG. 1 and FIG. 2, the dual mode portable terminal 100 includes a 1st terminal 10 operating in a 1st wireless communication network, a 2nd terminal 20 operating in a 2nd wireless communication network, and a connected memory 37 intermediating between the 1 st terminal 10 and the 2nd terminal 20.

The 1 st terminal 10 includes a 1 st controller 11, a 1st card slot 13, an input unit 15, a 1st memory 17, a 1st Radio Frequency (RF) communication unit 18 and a display unit 19. The 2nd terminal 20 includes a 2nd controller 21, a 2nd card slot 23, a 2nd memory 27 and a 2nd RF communication unit 28. The 1 st controller 11 is used as a master chip that installs an application 12 and a 1st data protocol stack 16. The 2nd controller 21 is used as a master chip that installs a 2nd data protocol stack 26, but not an application. In an exemplary implementation, since the 1st controller 11 is used as a master chip, the 2nd card slot 23 is connected to the 1 st controller 11. However, an exemplary embodiment of the present invention may be modified in such a way that the 2nd card slot 23 may be connected to the 2nd controller 21. The 1st memory 17, 2nd memory 27 and connected memory 37 are hereinafter referred to as a memory unit, i.e., the memory unit includes three memories.

Although the dual mode portable terminal 100 is described, assuming that the input unit 15 and display unit 19 are included in the 1st terminal 10, for convenient description, the input unit 15 and the display unit 19 may also be operated by the 2nd terminal 20.

The 1st controller 11 may be a microprocessor that controls the 1st terminal 10 and the dual mode portable terminal 100. As shown in FIG. 2, the 1st controller includes a 1st data protocol stack 16 having a variety of layers and processes data services therethrough.

The 1st controller 11 communicates with the 2nd controller 21 to process data services through the 2nd data protocol stack 26. During the communication, the 1st controller uses a socket layer. A socket 14 communicates with the 2nd controller 21 through the connected memory 37.

If the 1st controller is set to an active controller and receives a request to process a packet service, the 1st controller processes a data service through the 1st data protocol stack 16. However, if another service, for example, a modem service, is being processed through the 1st data protocol stack 16 when the 1st controller requests to process a packet service, the 1st controller 11 processes a corresponding packet service using the 2nd data protocol stack 26 of the 2nd controller 21..

The 1 st controller 11 may be a CDMA chip, a GSM chip, a Wireless Broadband (WiBro) chip or a High-Speed Downlink Packet Access (HSDPA) chip. In an exemplary embodiment of the present invention, the 1 st controller is implemented with a CDMA chip.

The 1 st card slot 13 serves to receive a 1 st card that is operated during the 1st RF communication mode. In an exemplary embodiment of the present invention, the 1st card is implemented with a CDMA User Identity Module (CDMA UIM). When the 1 st controller 11 is implemented with a GSM chip, the 1 st card may be a GSM Subscriber Identity Module (GSM SIM).

The input unit 15 is provided with a plurality of keys for operating the dual mode portable terminal 100. The input unit 15 generates key data according to user key selection and outputs the key data to the 1 st controller 11. For example, the key data includes user commands, which requests to execute a data service, selects a 1st controller 11 or a 2nd controller 21 to process a modem service, and the like. The input unit 15 may be implemented with input devices, such as a pointing device, a key pad, a touch pad and a touch screen.

The 1st memory 17 stores a program required to control operations of the 1 st terminal 10 and data generated during the execution of the program. The 1 st memory 17 includes one or more volatile and non-volatile memory devices. More particularly, the 1st memory 17 stores an application 12 for processing data services and data generated during the execution of the application 12 and stores a system program for implementing the 1 st data protocol stack 16.The 1 st memory also stores a socket program for connecting the application 12 and the 1st data protocol stack 16 when the 1st controller requests a data service process. In an exemplary embodiment of the present invention, the socket program is implemented by the Berkeley Software Distribution (BSD) method. Therefore, the 1 st memory 17 stores a BSD method socket program.

The 1st RF communication unit 18 transmits and receives a 1st RF signal between the first terminal 10 and the second terminal 20. For example, the 1 st communication unit 18 modulates a message signal output from the 1st controller 11 and transmits the modulated 1st RF signal through an antenna. The 1^{st} communication unit 18 also separates a message signal from a 1st RF signal received through the antenna, demodulates the separated message signal and outputs the demodulated signal to the 1 st controller 11.

The display unit 19 displays screens for all the function menus executed in the dual mode terminal 100 and data stored in the memory unit (1st memory 17, 2nd memory 27 and connected memory 37). The display unit 19 also displays a screen for selecting the 1 st controller 11 or the 2nd controller 21 so that a modem service may be processed. That is, a user may select one of the 1st controller 11 and the 2nd controller 21 to be used as a wireless modem. In an exemplary embodiment of the present invention, the display unit 19 is implemented with a Liquid Crystal Display (LCD). In that case, the display unit 19 is configured to include a controlling unit for controlling the LCD, a video memory for storing video data, and other parts of the LCD. On the other hand, if the display unit 19 is implemented with a touch screen, the display unit may serve to process a portion or all functions of the input unit 15.

The following description relates to the 2nd terminal 20.

The 2nd terminal 20 is controlled by the 2nd controller 21 that is implemented with a micro-processor. The 2nd controller 21, as shown in FIG. 2, includes a 2nd data protocol stack 26 having a variety of layers. The 2nd controller 21 also communicates with the 1st controller 11 through the connected memory 37 and a socket 24, which will be described later. The 2nd terminal 20 processes data services using the 2nd data protocol stack 26, according to the control of the 2nd controller 21.

When the 2nd controller 21 is set as an active controller and receives a packet service request from a user, the 2nd controller 21 processes a packet service through the 2nd data protocol stack 26. If the 2nd controller 21 is processing the other data service (for example, a modem service) through the 2nd data protocol stack 26, the 2nd controller processes a corresponding packet service using the 1st data protocol stack 16 of the 1 st controller 11.

The 2nd controller 21 may be implemented with at least one of the CDMA chip, the GSM chip, the WiBro chip and the HSDPA chip. In an exemplary embodiment of the present invention, the 2nd controller 21 is implemented with a GSM chip.

The 2nd card slot 23 receives a 2nd card that is operated in a 2nd RF communication mode. In an exemplary embodiment of the present invention, the 2nd card is implemented with a GSM SIM card. When at least one of the 1 st card slot 13 and 2nd card slot 23 receives one card, the dual mode terminal 100 is operated in a RF communication mode according to the type of card inserted. If the 1st card slot 13 and 2nd card slot 23 both receive cards, the dual mode terminal 100 may be operated in at least one of the 1st RF communication mode and the 2nd RF communication mode, according to a user's selection.

The 2nd memory 27 stores a program, required to control operations of the 2nd terminal 20, and data generated during the execution of the program. The 2nd memory 27 includes one or more volatile and non-volatile memory devices. In particular, the 2nd memory 27 stores a system program for implementing the 2nd data protocol stack 26. The 2nd memory 27 stores a socket program for connecting the application 12 and the 2nd data protocol stack 26 when the 2nd controller requests a data service process. The socket program is also implemented by the BSD method.

The 2nd RF communication unit 28 transmits and receives a 2nd RF signal between the 1st terminal 10 and the 2nd terminal 20. For example, the 2nd communication unit 28 modulates a message signal output from the 2nd controller 21 and transmits the modulated 2nd RF signal through an antenna. The 2nd RF communication unit 28 also separates a message signal from a 2nd RF signal received through the antenna, demodulates the separated message signal and outputs the demodulated signal to the 2nd controller 21.

The connected memory 37 allows the 1st controller 11 and 2nd controller 21 to simultaneously access each other so that the 1st controller and the 2nd controller 21 may store and read data therein and therefrom. The connected memory 37 may be implemented with a Dual Ported RAM (DPRAM). More particularly, the connected memory 37 is used to transmit signals or commands for the socket 14 and the socket 24. For example, if a data service (or a packet service) is processed through the 2nd data protocol stack 26 of the 2nd controller 21, the 1st controller 11 connects the application 12 and the 2nd data protocol stack 26 through the socket 14. To perform a connection operation, the 1 st controller 11 transmits a socket open command to the connected memory 37. The 2nd controller 21 receives the socket open command from the connected memory 37 and opens its socket 24. The application 12 of the 1st controller 11 is connected to the 2nd data protocol stack 26 of the 2nd controller 21 through the socket 14 and the socket 24, thereby processing a data service.

When the data service is processed in the 1st controller 11, the 1st controller 11 opens the socket 14 and then connects the application 12 and the 1 st data protocol stack 16 through the opened socket 14.

In an exemplary embodiment of the present invention, although the application 12 is installed in the 1 st controller 11, data services may be processed in the 1 st controller 11 or the 2nd controller 21 according to a user's selection.

In an exemplary implementation, the 1st controller 11 and the 2nd controller 21 may simultaneously process individual data services. In detail, while a data service, such as, a packet service, is processing in the 1 st controller 11, if a new data service, such as a modem service, is requested, the 1st controller processes the requested data service through the 2nd controller 21. That is, the 1st controller 11 and 2nd controller 21 may simultaneously process different data services.

The dual mode terminal 100 may process a modem service through the first controller 11 or the second controller 21 that is selected according to information input from outside the dual mode terminal 100, which is external information. The external information may be information that a user directly input through the input unit 15 or information input from an external computer (not shown) when the dual mode terminal 100 is connected to the external computer. It should be understood that the present invention is not limited thereto. For example, respective controllers (the 1 st controller 11 and the 2nd controller 21) are used as a wireless modem regardless of the types of external computers connected to the dual mode terminal 100. The 1st controller 11 or the 2nd controller 21 is not required to be selected in order to process a modem service, instead the modem service may be selectively processed upon demand.

In the following description, a method for processing data services of the dual mode terminal 100 is described in detail.

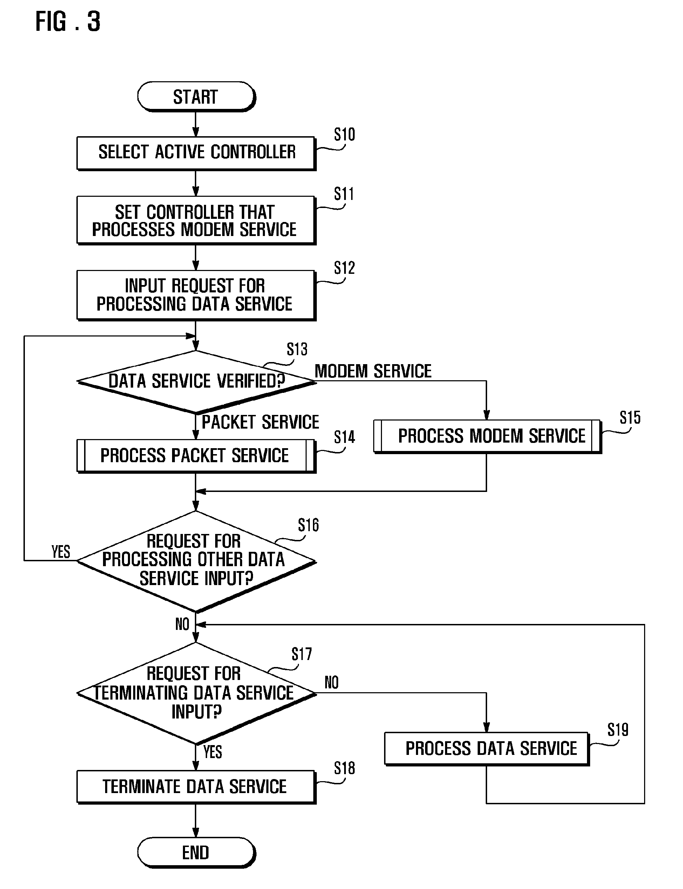

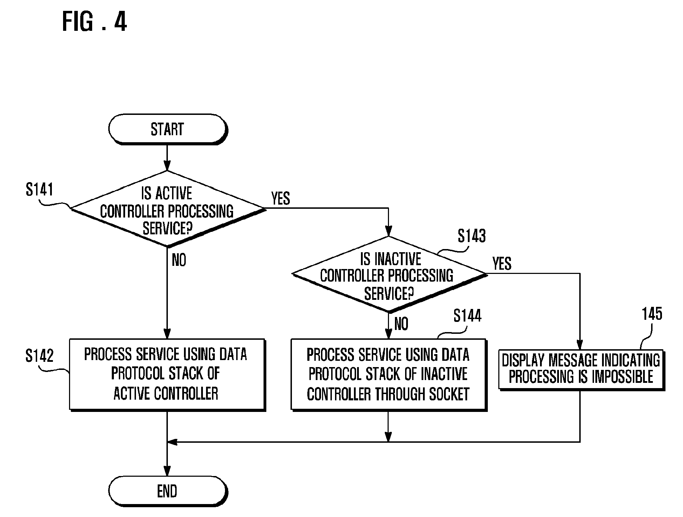

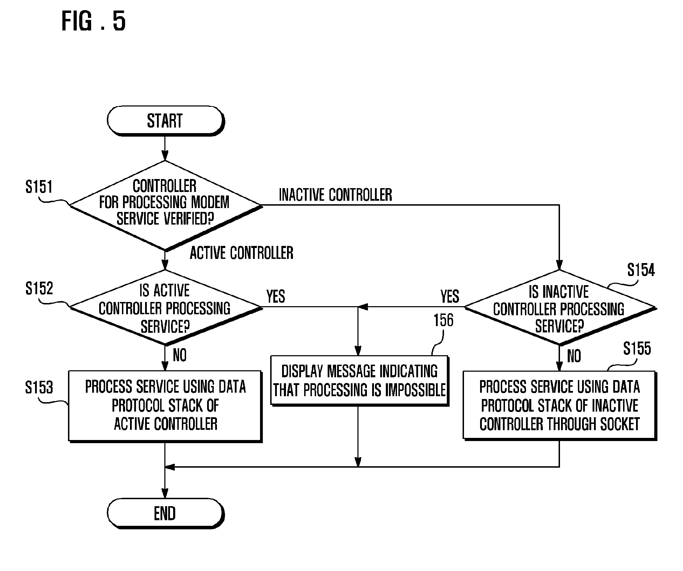

FIG. 3 is a flowchart describing a method for processing data services according to an exemplary embodiment of the present invention. FIG. 4 is a flowchart describing, in detail, a method for processing a packet service according to an exemplary embodiment of the present invention. FIG. 5 is a flowchart describing, in detail, a method from processing a modem service according to an exemplary embodiment of the present invention.

Referring to FIG. 1 to FIG. 5, the method for processing data services starts with a selection of an active controller in step S10. The active controller is set as a controller corresponding to an RF communication mode selected in the dual mode terminal 100.

The active controller may be selected in a variety of methods.

When a card is inserted into at least one of the 1st card slot 13 and the 2nd card slot 23 and then the dual mode terminal 100 is booted, the dual mode terminal 100 is operated in the RF communication mode corresponding to the inserted card. Therefore, the 1st controller 11 or the 2nd controller 21 is automatically set to an active controller. Specifically, when only a CDMA UIM is inserted and then the dual mode terminal 100 is booted, the 1 st controller 11 is set to an active controller. Similarly, when only a GSM SIM is inserted and then the dual mode terminal 100 is booted, the 2nd controller 21 is set to an active controller.

On the other hand, when both a CDMA UIM and a GSM SIM are inserted into the slots, a user may directly select a desired RF communication mode through a menu, so that a controller corresponding to the selected RF communication mode is an active controller. In that case, an inactive controller is the other controller whose communication mode is not selected by the user.

When an active controller is selected, i.e., when the dual mode terminal 100 is set to be operated in one of the RF communication modes, the 1st controller 11 or the 2nd controller 21 is set to process a modem service in step S11. That is, the 1st controller 11 or the 2nd controller 21 is previously set so that it may be recognized by an external computer connected to the dual mode terminal 100. Therefore, the external computer may recognize the 1st controller 11 and the 2nd controller 21. If the 1 st controller 11 and the 2nd controller 21 may be used as a wireless modem, the processing of the modem service in step S11 may be omitted.

The processing of the modem service in step S11 may be directly set by a user or automatically set in a process where the dual mode terminal 100 is connected to an external computer through a USB port and the like, and then a signal is mutually transmitted therebetween.

A data service process is requested in step S12. The data service process request is processed by a user. That is, the request may be input by a Multimedia Messaging Service (MMS), by a wireless Internet (i.e., a packet service) or by the dual mode terminal 100 connected to an external computer, which requests a wireless modem function process (i.e., a modem service).

When a data service process request is input in step S12, the 1st controller 11 as the master chip verifies the requested data service in step S13. If the requested data service is a packet service in step S13, the 1st controller 11 processes a packet service in step S14. On the other hand, if the requested data service is a modem service, the 1 st controller 11 processes a modem service in step S15.

The processing of the packet service in step S14is explained in detail with reference to FIG. 4.

When a packet service process request is input, the active controller determines whether a data service is being processed in step S141. When the active controller determines that a data service is not currently being processed, the active controller processes a corresponding packet service using its data protocol stack in step S142. For example, if the active controller is the 1st controller 11, the 1st controller 11 transmits information, input through the application 12, to the outside of the dual mode terminal 100 through its 1 st data protocol stack 16.

Here, the active controller, according to an exemplary embodiment of the present invention, processes a packet service using its data protocol stack when a packet service process request is input. However, when an active controller is set as a controller for processing a modem service and a modem service process request is input, the active controller cannot process the modem service. In this case, although the active controller may process a packet service through its data protocol stack, the packet service may be processed by an inactive controller.

On the contrary, when the active controller determines that a data service is being processed, the active controller determines whether the other data service is being processed in an inactive controller in step S143.

When the active controller determines that a data service is not being processed in step S143, the active controller processes a corresponding packet service using a data protocol stack of the inactive controller in step S144. In step S144, the active controller and inactive controller communicate with each other through the socket 14 and the socket 24, which processes a packet service. For example, when the active controller is the 1st controller 11, the 1st controller 11 transmits information, input through the application 12, to the outside of the dual mode terminal 100 using the 2nd data protocol stack 26 of the 2nd controller 21.

On the contrary, when the active controller determines that the other data service is not being currently processed in the inactive controller in step S143, the active controller displays a message indicating that a data service cannot be processed in step S145.

The processing of the modem service in step S15is described in detail with reference to FIG. 5.

When a modem service process request is input, a controller, set to process a modem service in step S11, is verified as an active controller or an inactive controller in step S151.

If the controller, set to process a modem service in step S11, is verified as an active controller in step S151, the active controller determines whether its data protocol stack is being used for the other data service in step S152. When the active controller determines that its data protocol stack is not being used for the other data service in step S152, the active controller processes a corresponding modem service using its data protocol stack in step S153. For example, if the active controller is the 1st controller 11, the 1st controller 11 transmits information, input through an external computer, to the outside of the dual mode terminal 100 using its 1st data protocol stack 16.

On the contrary, when the active controller determines that its data protocol stack is being used for the other data service in step S152, the active controller cannot process a modem service. In this case, the active controller displays a message that a modem service cannot be processed in step S156.

On the other hand, if the controller, set to process a modem service in step S11, is verified as an inactive controller in step S151, the active controller determines whether the other data service is already being processed in an inactive controller in step S154.

If the active controller determines that the other data service is not being processed in an inactive controller in step S154, the active controller processes a corresponding modem service using the data protocol stack of the inactive controller in step S155. In step S155, the active controller processes a modem service using only the data protocol stack of the inactive controller. For example, if the active controller is the 1st controller 11, the 1st controller 11 transmits information, input through an external computer, to the outside of the dual mode terminal through the 2nd data protocol stack 26 of the 2nd controller 21.

On the contrary, if the active controller determines that the other data service is currently being processed in an inactive controller in step S154, the active controller displays a message that a data service cannot be processed in step S156. However, as described above, if a controller for processing a modem service does not need to be set, it is determined whether a data service is being processed with respect to the 1st controller and the 2nd controller. In this case, when a modem service process request is input, the active controller is operated to process a packet service using a data protocol stack of the inactive controller. Accordingly, a packet service may be processed in the active controller. It should be, however, understood that the present invention is not limited thereto.

As described above, when at least one data service is processed in step S14 or in step S15, the active controller determines whether another data service process request is input in step S16. When another data service process request is input in step S16, i.e., a new data service is requested, the active controller returns to step S13.

When a packet service is being processed in the 1st controller 11 serving as an active controller, if a modem service process request is input in step S16, the active controller is operated as follows. Here, it is assumed that a controller for processing a modem service is set as the 2nd controller.

Since a modem service process request is input in step S16, the active controller proceeds to step S15. That is, the active controller determines that the controller for processing a modem service is set as the 2nd controller 21 serving as an inactive controller and then proceeds to step S154.

The active controller determines that the 2nd controller 21 is not processing a data service in step S154 and then proceeds to step S155. Therefore, the active controller processes a modem service using the 2nd data protocol stack 26 of the 2nd controller 21.

On the other hand, a modem service may be processed without displaying an additional message on a screen. Therefore, when a packet service and a modem service are simultaneously processed, the application 12 of the 1st controller 11 is used only to process the packet service (i.e., the packet service is processed through the 1st data protocol stack 16 of the 1st controller 11) and the modem service is processed only through the 2nd data protocol stack 26 of the 2nd controller 21.

Also, when a modem service is being processed in the 1 st controller 11 serving as an active controller, if a packet service process request is input in step S16, the active controller is operated as follows.

Since a packet service process request is input in step S16, the active controller proceeds to step S14. That is, the active controller determines that a model service is being processed in the 1st controller 11 serving as an active controller and then proceeds to step S143.

The active controller determines that a data service is not being processed in the 2nd controller 21 serving as an inactive controller in step S143. Therefore, the active controller proceeds to step S144 and then processes a packet service using the 2nd data protocol stack 26 of the 2nd controller 21. As described above, since the 1 st controller 11 is processing a modem service, the 1 st controller 11 does not need to use the application 12. Therefore, the active controller connects the application 12 and the 2nd data protocol stack 26 of the 2nd controller 21 and processes a packet service.

As described above, the dual mode terminal 100, configured with a single body, according to an exemplary embodiment of the present invention, may simultaneously process two data services. While the dual mode terminal 100 is processing a data service, the active controller determines whether a data service termination is requested from a user or an external computer in step S17.

If a data service termination is not requested in step S17, the dual mode terminal 100 continues to process a data service in step S19. That is, the data service is continuously processed until a data service termination request is input. On the contrary, if a data service termination is requested in step S17, the active controller terminates the currently processed data service in step S18. When two data services are processed simultaneously, if a request is input to terminate only a single data service, the active controller terminates only the corresponding data service.

As described above, the data service processing method according to an exemplary embodiment of the present invention may process respective data services using two controllers of a dual mode terminal, thereby using hardware resources efficiently. In addition, since one portable terminal may process both data services, the portable terminal may provide a user with a convenient method of operation.

It should be understood that the dual mode terminal and the data service processing method according to an exemplary embodiment of the present invention are not limited thereto and many possible modifications may be made without departing from the scope and spirit of the invention.

For example, although the dual mode terminal, according to an exemplary embodiment of the present invention, includes a CDMA chip and a GSM chip, it should be understood that the present invention is not limited thereto. That is, the present invention may be applied to any dual mode terminal with any chips that have data protocol stacks and may process data services.

In addition, although the active controller according to an exemplary embodiment of the present invention controls and processes the entire operation for processing data services, it should be understood that the present invention is not limited thereto. For example, the present invention may be applied to controllers set as a master chip.

Furthermore, a data service processing method according to an exemplary embodiment of the present invention was described with respect to a portable terminal that operates in a dual mode. However, the method may be applied to all electronic devices, such as a mobile device, a personal computer, a laptop computer, a Portable Media Player (PMP) and the like, which include more than two different control chips each including data service functions.

As described above, the dual mode portable terminal having two controllers, according to exemplary embodiments of the present invention, may process respective data services using two controllers. Therefore, the dual mode portable terminal may efficiently use hardware resources. More particularly, since the dual mode portable terminal may simultaneously process two data services, user convenience is increased.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for processing data services in a dual mode terminal comprising a first (1st) controller comprising an application and a 1st data protocol stack, and a second (2nd) controller comprising a 2nd data protocol stack, the method comprising:
processing a 1st data service in at least one of the 1st controller and the 2nd controller;
inputting a request for processing a 2nd data service during the processing of the 1 st data service; and
processing the 2nd data service in another controller comprising at least one of the 1 st controller and the 2nd controller which does not process the 1 st data service.

2. The method of claim 1, further comprising processing the 1st data service and the 2nd data service together, according to the processing of the 2nd data service.

3. The method of claim 2, wherein, if at least one of the 1st data service and the 2nd data service is processed in the 2nd controller, the 1st controller is communicated with the 2nd data protocol stack of the 2nd controller through socket layers and processes the 1 st data service and the 2nd data service.

4. The method of claim 3, wherein the 1st data service and the 2nd data service each comprise:
a packet service for performing direct data communication through the application; and
a modem service for relaying data through a wireless modem of a computer.

5. The method of claim 4, wherein the packet service is processed through a wireless platform comprising at least one of a Binary Runtime Environment for Wireless (BREW), a General Virtual Machine (GVM), JAVA and a Wireless Internet Platform for Interoperability (WIPI).

6. The method of claim 4, further comprising selecting at least one of the 1 st controller and the 2nd controller in order to process the modem service.

7. The method of claim 4, wherein the 1st controller and the 2nd controllers each comprise a Code Divisional Multiple Access (CDMA) chip, a Global System for Mobile communication (GSM) chip, a Wireless Broadband (WiBro) chip, and a High-Speed Downlink Packet Access (HSDPA) chip.

8. The method of claim 4, wherein, if the 1st data service comprises the packet service, the 2nd data service comprises the modem service.

9. The method of claim 4, wherein the modem service is processed through at least one of the 1 st data protocol stack and the 2nd data protocol stack.

10. A dual mode terminal comprising:
a first (1 st) controller comprising an application and a 1 st data protocol stack; and
a second (2nd) controller comprising a 2nd data protocol stack,
wherein, if a request for processing a 2nd data service is input while a 1st data service is being processed in at least one of the 1st controller and the 2nd controller, the 2nd data service is processed by another controller comprising at least one of the 1 st controller and the 2nd controller which does not process the 1 st data service.

11. The dual mode terminal of claim 10, wherein the 1st data service and the 2nd data service are simultaneously processed by the 1st and 2nd controllers, respectively.

12. The dual mode terminal of claim 11, wherein, if at least one of the 1 st data service and the 2nd data service is being processed in the 2nd controller, the 1st controller communicates with the 2nd data protocol stack of the 2nd controller through socket layers and processes the 1 st data service and 2nd data service.

13. The dual mode terminal of claim 12, wherein the 1st data service and 2nd data service each comprise:
a packet service for performing direct data communication through the application; and
a modem service for relaying data through a wireless modem of a computer.

14. The dual mode terminal of claim 13, wherein the modem service is processed by at least one of the 1st controller and the 2nd controller which, is selected by an external input.

15. The dual mode terminal of claim 13, wherein, if the 1st data service comprises the packet service, the 2nd data service comprises the modem service.
